(19) Europäisches Patentamt
European Patent Office
Office européen des brevets

(11) Veröffentlichungsnummer: **0 017 772**
**B1**

(12) # EUROPÄISCHE PATENTSCHRIFT

(45) Veröffentlichungstag der Patentschrift: **28.07.82**

(21) Anmeldenummer: **80101392.1**

(22) Anmeldetag: **17.03.80**

(51) Int. Cl.³: **C 08 G 65/32,** A 61 K 47/00, A 01 N 25/02, A 01 N 47/36, A 01 N 47/18, A 61 K 9/00

(54) **Verfahren zur Verbesserung der Löslichkeit biologisch aktiver Wirkstoffe in Wasser und niederen aliphatischen Alkoholen sowie neue Verbindungen mit verbesserter Löslichkeit.**

(30) Priorität: **28.03.79 DE 2912289**

(43) Veröffentlichungstag der Anmeldung: **29.10.80 Patentblatt 80/22**

(45) Bekanntmachung des Hinweises auf die Patenterteilung: **28.07.82 Patentblatt 82/30**

(84) Benannte Vertragsstaaten: **BE CH DE FR GB IT NL**

(56) Entgegenhaltungen:
**EP-A-0 014 263**
**DE-A-2 645 079**
**FR-A-2 194 446**
**FR-A-2 196 342**
**FR-A-2 264 522**
**US-A-2 857 261**

**DIE MAKROMOLEKULARE CHEMIE, Band 179, Nr. 5, Mai 1978, Seiten 1135-1144**
**A. CHAABOUNI et al.: «Synthèse de poly(oxyéthylène)s rendus biospécifiques par fixation de stéroïdes en extrémités de chaînes. Utilisation d'un poly(oxyéthylène) substitue par des groupes estradiol pour extraire l'isomérase delta 5-4 oxo-3 stéroïde, par partage d'affinité»**

(73) Patentinhaber: **BAYER AG, Zentralbereich Patente, Marken und Lizenzen, D-5090 Leverkusen 1, Bayerwerk (DE)**

(72) Erfinder: **Möhring, Edgar, Dr., Hufer Weg 49a, D-5060 Bergisch-Gladbach (DE)**
Erfinder: **Müller, Hans Peter, Dr., St. Pankratiusstrasse 2, D-5068 Odentahl (DE)**
Erfinder: **Wagner, Kuno, Dr., Am Kiesberg 8, D-5090 Leverkusen (DE)**
Erfinder: **Tietz, Helmut, Dr., Schwalbenweg 12, D-5090 Leverkusen (DE)**

**EP 0 017 772 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Verbesserung der Löslichkeit biologisch aktiver Wirkstoffe in Wasser und niederen aliphatischen Alkoholen sowie neue Verbindungen mit verbesserter Löslichkeit

Die vorliegende Erfindung betrifft ein neues Verfahren zur Verbesserung der Löslichkeit biologisch aktiver Wirkstoffe mit mindestens einem Zerewitinoff-aktiven Wasserstoffatom in Wasser und niederen aliphatischen Alkoholen, neue nach diesem Verfahren hergestellte Verbindungen und ihre Verwendung.

Unter dem Begriff biologisch aktive Wirkstoffe werden organisch chemische Verbindungen verstanden, die auf dem Pflanzenschutzgebiet sowie in der Human- und Tiermedizin wirksam sind. Viele dieser Wirkstoffe sind in Wasser und in niederen aliphatischen Alkoholen schwer löslich. Sie lassen sich daher in flüssiger Form nur unter Zuhilfenahme von Lösungsvermittlern anwenden. Um die Verwendung solcher Stoffe bei den Anwendungsformen der biologisch aktiven Wirkstoffe so weit als möglich zu reduzieren, ist es wünschenswert, die Löslichkeit dieser Wirkstoffe in Wasser oder niederen aliphatischen Alkoholen zu verbessern.

1. Es wurden neue Verbindungen gefunden, die dadurch gekennzeichnet sind, dass man biologisch aktive Wirkstoffe mit mindestens einem Zerewitinoff-aktiven Wasserstoffatom mit einem OH-, NH- oder $HN_2$-monofunktionellen hydrophilen Polyäther mit einem Wasseraufnahmevermögen von mindestens 10%, bezogen auf das Gewicht des Polyäthers und einer Verbindung der Formel (II)

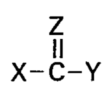 (II)

in welcher

X und Y gleich oder verschieden sind und für Halogen, Halogenalkoxy, Alkoxy, Alkylmercapto, Halogenalkylmercapto, Aryloxy oder gemeinsam für Alkylendioxy stehen, und

Z für −O−, −S−, >N+R steht,

wobei R für lineares oder verzweigtes Alkyl mit 1 bis 18 C-Atomen oder für gegebenfalls ein- oder mehrfach durch Halogen, Alkyl, Alkoxy, Alkylmercapto, Halogenalkyl, Halogenalkylmercapto, Phenoxy substituiertes Phenyl oder Naphthyl steht, umsetzt, wobei entweder

a) zunächst der Polyäther mit der Verbindung der Formel (II) im Äquivalentverhältnis 1:1 umgesetzt wird und die so erhaltene Verbindung im Molverhältnis 1:1 mit dem Wirkstoff umgesetzt wird oder

b) der Wirkstoff mit der Verbindung der Formel (II) im Äquivalentverhältnis 1:1 umgesetzt wird und die erhaltene Verbindung mit dem Polyäther umgesetzt wird oder

c) Wirkstoff, Polyäther und Verbindung der Formel (II) im Äquivalentverhältnis 1:1:1 umgesetzt werden.

2. Es wurde ferner ein Verfahren zur Herstellung der Verbindungen gemäss 1 (oben) gefunden, das dadurch gekennzeichnet ist, dass man biologisch aktive Wirkstoffe mit mindestens einem Zerewitinoff-aktiven Wasserstoffatom mit einem OH-, NH- oder $NH_2$-monofunktionellen hydrophilen Polyäther mit einem Wasseraufnahmevermögen von mindestens 10%, bezogen auf das Gewicht des Polyäthers mit einer Verbindung der Formel (II)

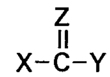 (II)

in welcher

X und Y gleich oder verschieden sind und für Halogen, Alkyl mit 1 bis 6 C-Atomen, Halogenalkoxy, Alkoxy, Alkylmercapto, Halogenalkylmercapto, Aryloxy oder gemeinsam für Alkylendioxy stehen, und

Z für −O−, −S−, >N−R steht,

wobei R für lineares oder verzweigtes Alkyl mit 1 bis 18 C-Atomen oder für gegebenenfalls ein- oder mehrfach durch Halogen, Alkyl, Alkoxy, Alkylmercapto, Halogenalkyl, Halogenalkylmercapto, Phenoxy substituiertes Phenyl oder Naphthyl steht,

in einem inerten Lösungsmittel umsetzt, wobei entweder

a) zunächst der Polyäther mit der organischen Verbindung im Äquivalentverhältnis 1:1 umgesetzt wird und die so erhaltene Verbindung im Molverhältnis 1:1 mit dem Wirkstoff umgesetzt wird oder

b) der Wirkstoff mit der organischen Verbindung der Formel (II) im Äquivalentverhältnis 1:1 umgesetzt wird und die erhaltene Verbindung mit dem Polyäther umgesetzt wird oder

c) Wirkstoff, Polyäther und Verbindung der Formel (II) im Äquivalentverhältnis 1:1:1 umgesetzt werden.

Unter dem Begriff Zerewitinoff-aktives Wasserstoffatom versteht man ein Wasserstoffatom, welches in einer organischen Verbindung an ein Zentrum gebunden ist, welches, verglichen mit einem C-Atom eines Kohlenwasserstoffs, eine stark elektronenabziehende Wirkung ausübt. Im engeren Sinne bedeutet Zerewitinoff-aktiv ein im Sinn der Reaktion:

$$CH_3MgI + H{-}X \longrightarrow CH_4 + IMgX$$

aktives H-Atom. [s.a. Beyer „Lehrbuch der organischen Chemie" (1968), Seite 147].

Die so erhaltenen neuen Verbindungen weisen überraschenderweise bei gleichbleibender und zum Teil verbesserter oder erweiterter biologischer Aktivität verglichen mit den Ausgangswirkstoffen eine wesentlich verbesserte Löslichkeit in Wasser und niederen aliphatischen Alkoholen auf.

Die Tatsache, dass die nach dem erfindungsgemässen Verfahren erhaltenen Wirkstoffe, trotz einer das Molekulargewicht verändernden Modifizierung eine, verglichen mit den Ausgangswirkstoffen gleichbleibende Wirkung aufweisen, kann darauf zurückzuführen sein, dass der an den Wirkstoff angekoppelte Polyätherteil nicht im Organismus des Tieres oder der Pflanze abgespalten wird,

sondern dass vielmehr das Molekül als ganzes, also mit Polyätherteil für die Wirkung wichtig ist.

Als OH, NH oder $HN_2$ monofunktionelle hydrophile Polyäther kommen prinzipiell alle Polyäther mit einer $-OH-$, $-NH-$ oder $-NH_2$-Endgruppe und mit mindestens zwei bis höchstens vierhundert Äthylenoxideinheiten sowie Mischblockpolyäther mit zusätzlichen Propylenoxideinheiten in Frage. Bevorzugt verwendet man Polyäther der allgemeinen Formel (I)

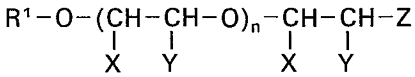 (I)

in welcher

X und Y für Wasserstoff oder Methyl stehen, wobei X und Y nicht beide für Methyl stehen dürfen,

$R^1$ für Reste von Startermolekülen, die ein im Sinne der Alkoxylierungsreaktion aktiven Wasserstoffatom aufweisen, steht,

Z für $-OH$, $-NHR^2$, $-NH_2$ oder

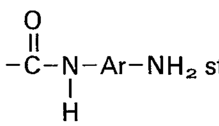 steht, wobei

$R^2$ für geradkettiges oder verzweigtes Alkyl mit bis zu 18 C-Atomen steht,

Ar für gegebenenfalls ein- oder mehrfach durch Halogen, Cyano, Alkyl $C_{1-4}$ oder Halogenalkyl substituiertes Phenylen steht und

n für ganze Zahlen zwischen 1 und 399 steht, wobei n in Verbindung mit Startermolekülen mit einer Kohlenstoffatomzahl grösser als 10, mindestens 8 ist.

Bei Mischblockpolyäthern liegt das Verhältnis von Propylenoxideinheiten zu Äthylenoxideinheiten zwischen 0:1 und ':1.

Als Startermoleküle dienen z.B. einwertige Alkohole, Phenole oder sekundäre Amine, bevorzugt für

Methanol, Äthanol, 1-Propanol, 2-Propanol, 1-Butanol, 2-Butanol, 2-Methyl-2-propanol, 1-Pentanol, 3-Methyl-1-butanol, 2,2-Dimethylpropanol, 1-Hexanol, 4-Methyl-2-pentanol, 2-Äthyl-1-butanol, 1-Octanol, 2-Äthyl-1-hexanol, 1-Nonanol, 1-Decanol, 1-Dodecanol, 1-Tetradecanol, 1-Hexadecanol, 1-Octadecanol, 1,2-Diäthoxy-2-propanol, Cyclohexanol, 2-Methylcyclohexanol, 3-Methylcyclohexanol, 4-Methylcyclohexanol, Cyclohexanmethanol, 3,3,5-Trimethylcyclohexanol, 4-tert.-Butylcyclohexanol, 2-Methylphenol, 3-Methylphenol, 4-Methylphenol, Benzylalkohol, 2-Äthylphenol, 1-Phenyläthanol, 2-Phenyläthanol, 2,3-Dimethylphenol, 3,4-Dimethylphenol, 2,6-Dimethylphenol, 2,4-Dimethylphenol, 3,5-Dimethylphenol, 3-Phenyl-1-propanol, 2-Isopropylphenol, 3-Äthyl-5-Methylphenol, 2,3,5-Trimethylphenol, 2-(1-Methylpropyl)phenol, 2-(1,1-Dimethyläthyl)phenol, 4-(1,1-Dimethyläthyl)phenol, 3-Methyl-5-(1-methyläthyl)phenol, 5-Methyl-2-(1-methyläthyl)phenol, 4-Methoxyphenol, 4-Methoxybenzylalkohol, Dimethylamin, Diäthylamin, Di-n-propylamin, Diisopropylamin, Di-n-butylamin, Diisobutylamin, Bis-(2-äthylhexyl)amin, Methyloctadecylamin, N-Methylcyclohexylamin, N-Äthylcyclohexylamin, 2-Methylcyclohexylamin, 3-Methylcyclohexylamin, 4-Methylcyclohexylamin, N-Methylanilin, N-Äthylanilin, N-Propylanilin, N-Butylanilin, N-Isobutylanilin, Diphenylamin, N,2-Dimethylanilin, N-Äthyl-2-methylanilin, N-Äthyl-3-methylanilin, N-Butyl-3-methylanilin, N,4-Dimethylanilin, N-Äthyl-4-methylanilin, Methylbenzylamin, Phenylbenzylamin.

Besonders bevorzugt verwendet man Polyäther der allgemeinen Formel

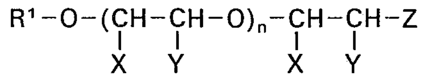 (I)

in denen

$R^1$ für Reste von Monoalkoholen mit 1 bis 6 C-Atomen steht,

X und Y für Wasserstoff steht,

Z für $-OH$, $-NH_2$, $-NHR^2$ oder

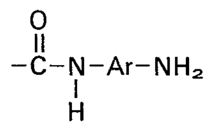 steht, wobei

$R^2$ für geradkettiges Alkyl mit 1 bis 6 C-Atomen steht,

Ar für gegebenenfalls ein- oder mehrfach durch Halogen und/oder Halogenalkyl substituiertes Phenylen steht und

n eine ganze Zahl zwischen 1 und 160 ist.

Ganz besonders bevorzugt verwendet man Polyäther der allgemeinen Formel (I) in denen

$R^1$ für Reste von Monoalkoholen mit 1 bis 4 C-Atomen, insbesondere für den Rest von n-Butanol steht,

X und Y für Wasserstoff steht,

Z für $-OH$, $-NH_2$ oder

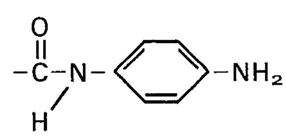 steht und

n eine ganze Zahl zwischen 1 und 90 ist.

Die beim erfindungsgemässen Verfahren einzusetzenden Polyäther bzw. Mischblockpolyäther müssen ein Wasseraufnahmevermögen von mindestens 10%, bezogen auf das Gewicht des Polyäthers bzw. Mischblockpolyäthers besitzen.

Als Verbindungen mit zwei gegenüber Zerewitinoff-aktiven Wasserstoffatomen reaktiven Gruppen an einem C-Atom verwendet man Verbindungen der allgemeinen Formel (II)

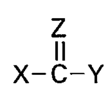 (II)

in welcher

X und Y gleich oder verschieden sind und für Halogen, Alkyl mit 1 bis 6 C-Atomen, Halogenalkoxy, Alkoxy, Alkylmercapto, Halogenalkylmercapto, Aryloxy oder gemeinsam für Alkylendioxy stehen, und

Z für −O−, −S−, >N−R steht,

wobei R für lineares oder verzweigtes Alkyl mit 1 bis 18 C-Atomen oder für gegebenenfalls ein- oder mehrfach durch Halogen, Alkyl, Alkoxy, Alkylmercapto, Halogenalkyl, Halogenalkylmercapto, Phenoxy substituiertes Phenyl oder Naphthyl steht.

Bevorzugt stehen dabei X und/oder Y für Halogen und/oder Alkoxy, insbesondere Methoxy oder für Phenoxy oder Äthylendioxy und Z für

−O−, −S− oder >N− 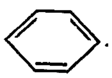.

Ganz besonders bevorzugt sind als Verbindungen der allgemeinen Formel (II), welche dazu dienen, den Polyäther der allgemeinen Formel (I), in eine gegenüber Zerewitinoff-aktiven Wasserstoffatomen reaktive Form zu überführen, solche, in denen

X und Y für Halogen oder Alkoxy steht und

Z für −O− oder −S− steht.

Besonders genannt seien in diesem Zusammenhang Phosgen, Thiophosgen, Chlorameisensäuremethylester, Chlorameisensäureäthylester sowie Chlorameisensäuretrichlormethylester, Glykolcarbonat und Diphenylcarbonat.

Als biologisch aktive Wirkstoffe mit mindestens einem Zerewitinoff-aktiven Wasserstoffatom werden Verbindungen eingesetzt, die auf dem Gebiet des Pflanzenschutzes sowie der Human- und Tiermedizin wirksam sind. Als Wirkstoffe auf dem Gebiet des Pflanzenschutzes seien unter anderem genannt: Insektizide, Akarizide, Fungizide, Bakterizide, Mikrobizide, Herbizide, Pflanzenwachstumsregulatoren, Rodentizide, Nematizide.

Als Wirkstoffe auf dem Gebiet der Humanmedizin und Tiermedizin seien unter anderem genannt: Arzneimittel zur Schmerzbekämpfung, Hypnotica, Psychopharmaka, Analeptika, Appetitzügler, Antiphlogistica, Antihistaminica, Hämologica, Diuretica, Antidiuretica, Arzneimittel mit Wirkung auf Herz und Gefässe, Gefässwände und Blutlipide, Magen-Darm-Trakt und auf den Respirationstrakt, Antimykotica, Antihelmintika, Antibakterielle Mittel, Mittel gegen Protozoenerkrankungen. Voraussetzung ist, dass diese Wirkstoffe mindestens ein Zerewitinoff-aktives Wasserstoffatomen besitzen.

Besonders erwähnt seien in diesem Zusammenhang Wirkstoffe, die eine oder mehrere >N−H Gruppen im Molekül aufweisen: Dazu gehören unter anderem Derivate von stickstoffhaltigen Heterocyclen wie Pyrrol, Indol, Carbazol, Pyrazol, Imidazol, Benzimidazol, Hydantoin, Oxazol, Isoxazol, Triazol, Oxadiazol, Tetrazol, Pyridin, Chinolin, Isochinolin, Pyridazin, Pyrimidin, Uracil, Barbitursäure, Pyrin, Chinazolin, Pyrazin, Pteridin, Phenazin, Oxazin (1,2 und 1,3 und 1,4), Triazin (v, as, s), Thiadiazin oder Harnstoffderivate, Carbamate, Hydroxylaminderivate, Aminoalkohole, Aminophenole, Aminocarbonsäuren, Carbonsäurehydrazide, Amidine, Thioharnstoffderivate, Guanidinderivate, Cyansäurederivate, oder Naturstoffe (natürlich, halbsynthetisch oder synthetisch hergestellt) wie beispielsweise Aminosäuren, Peptide, Kohlenhydrate, Nucleinsäuren mit freier NH-Valenz.

Ferner seien in diesem Zusammenhang erwähnt biologisch aktive Alkohole, Carbonsäuren, Sulfonsäuren, Sulfensäuren, Sulfinsäuren, Mercaptane, Kohlensäure oder Phosphor- bzw. Phosphonsäuren bzw. deren Derivate.

Als Verbindungen mit einer Stickstoffheterocyclengruppierung im Molekül seien insbesondere genannt: Triazolderivate, Thiazolderivate, Imidazolderivate, Pyrimidinderivate, Uracilderivate und Triazinderivate. Besonders hervorzuheben sind dabei die nachfolgend aufgeführten Verbindungen:

2-Amino-4-methyl-5-carboxanilidothiazol,
3-Amino-1,2,4-triazol,
2-Methoxy-4-äthylamino-6-isopropylamino-s-triazin,
5-Brom-3-sec.-butyl-6-methyluracil,
4-o-Chlorphenylhydrazinyl-3-methylisoxazol-5-on-2,4-dichloro-6-(o-chloranilino)-s-triazin,
5-Amino-1-bis-(dimethylamido)phosphoryl-3-phenyl-1,2,4-triazol,
2,4-Dimethyl-5-carboxanilidothiazol,
O,O-Dimethyl-S-(4,6-diamino-1,3,5-triazin-2-yl)methylphosphordithioat,
4-(2-Chlorphenylhydrazonyl)-3-methylisoxazol-5-on,
3,3'-Äthylen-bis-(tetrahydro-4,6-dimethyl-[2H], 1,3,5-thiadiazin-2-thion),
2-(2'-Furyl)benzimidazol,
S-(4,6-Diamino-1,3,5-triazinyl-methyl)dimethylphosphordithioat,
3-Methyl-5-carboxymethyltetrahydro-1,3,5-thiazin-2-thion,
2,4-Bis-isopropylamino-6-methylmercapto-s-triazin,
2-Methylamino-4-isopropylamino-6-methylmercapto-s-triazin,
2-Isopropylamino-4-äthylamino-6-methylmercapto-s-triazin,
2-Äthylamino-4-tert.-butylamino-6-methylmercapto-s-triazin,
2-Isopropylamino-4-methoxypropylamino-6-methylmercapto-s-triazin,
1,2-(3'-Pyridyl)pyrrolidin,
Dibenzo-1,4-thiazin,
2-Methoxy-4,6-bis(isopropylamino)-s-triazin,
2-Chlor-4,6-bis(isopropylamino)-s-triazin,
5-Amino-4-chlor-2-phenyl-3[2H]-pyridazinon,
2-Chlor-4,6-bis-äthylamino-s-triazin,
1-(p-Sulfamylphenyl)-2,5-dimethyl-4-nitroso-pyrazol,
3-Cyclohexyl-5,6-trimethylenuracil,
4-Amino-6-tert.-butyl-3-(methylthio)-1,2,4-triazin-5-[4H]-on,
3-Methyl-4-amino-6-phenyl-1,2,4-triazin-5-[4H]-on,

1,3-Di-p-chlorphenyl-[1H,2H,3H,4H,5H,6H]-1,3,5-triazin-2,4-dion,
7-Chlor-2,3-dihydro-2,2-dihydroxy-5-phenyl-[1H]-benzo(f)-1,4-diazepin-3-carbonsäure,
3,5-Dioxo-2,3,4,5-tetrahydro-1,2,4-triazin,
2-Nitroimidazol,
2-Amino-5-nitrothiazol,
D-4-Amino-3-isoxazolidinon,
1,3-Dimethyl-[1H,2H,3H,4H,5H,6H]-1-3,5-triazin2,4-dion,
1,3-Diisopropyl-[1H,2H,3H,4H,5H,6H]-1,3,5-triazin-2,4-dion,
5,5-Dibromhexahydropyrimidin-2,4,6-trion,
5-Fluorpyrimidin-2,4-diol,
4-Amino-5-fluorpyrimidin-2-[1H]-on,
2-Thioxohexahydropyrimidin-4,6-dion,
1,3-Di-p-fluorphenyl-[1H,2H,3H,4H,5H,6H]-1,3,5-triazin-2,4-dion,
2-Amino-5-nitropyrimidin,
5-Amino-[1H]-vic.triazolo(d)pyrimidin-7-ol,
1,3-Bis-4-Trifluormethylphenyl-[1H,2H,3H,4H,5H,6H]-1,3,5-triazin-2,4-dion,
1-Methyl-2-mercaptoimidazol,
2-Amino-4-methylthiazol,
4-Aminoperhydro-1,2-oxazin-3-on,
3,5-Dijod-4[1H]-pyridon,
1H-Pyrazolo-(3,4,d)-pyrimidin-4-ol,
1H-Pyrazolo-(3,4,d)-pyrimidin-4-thiol,
6-Mercaptopurin,
6-Aminopurin,
6-Aminopyrin-8-[9H]-on,
4-Methyl-3-thiouracil,
1,3-Bis-4-Chlor-3-trifluormethylphenyl-[1H,2H,3H,4H,5H,6H]-1,3,5-triazin-2,4-dion,
6-Carbamoyl-3-hydarzinopyridazin,
2-(5-Nitro-2-furyl)-5-amino-1,3,4-thiadiazol,
Trimethylolmelamin,
N-Guanidinoformimidoylmorpholin,
4-Amino-2,2,5,5-tetrakis-(trifluormethyl)-3-imidazolin,
6-Chlor-7-sulfamoyl-[2H]-1,2,4-benzothiadiazin-1,1-dioxid,
1,3-Bis-3-Chlor-4-trifluormethylphenyl-[1H,2H,3H,4H,5H,6H]-1,3,5-triazin-2,4-dion,
1,3-Dimethylpurin-2,6[1H,3H]-dion,
4-Amino-1-ribofuranosyl-1,3,5-triazin-2-[1H]-on,
2-Amino-5-p-Chlorphenyl-2-oxazolin,
2-Sulfanilamidothiazol,
3,3-Diäthylpyridin-2,4[1H,3H]-dion,
3-Äthyl-1-allyl-6-aminouracil,
3(5)-Ribofuranosyl-4-hydroxypyrazol-5(3)-carboxamid,
5-Äthyl-5-isopropylhexahydropyrimidin-2,4,6-trion,
3-Chlor-4-(3-Chlor-2-nitrophenyl)pyrrol,
5,7-Dichlor-2-methylchinolin-8-ol,
2-Amino-5-(4-trifluormethylphenyl)-2-oxazolin,
2-Sulfanilamidopyrimidin,
1,3-Bis-(3,4-Dichlorphenyl)-[1H,2H,3H,4H,5H,6H]-1,3,5-triazin-2,4-dion,
1-(3,Aminophenyl)-2[1H]-pyridon,
4-Benzyl-2-thiouracil,
4-Amino-6-methyl-2-phenyl-3[2H]-pyridazinon,
2-(p-Aminobenzolsulfonamido)-4-methylpyrimidin,
2-(p-Aminobenzolsulfonamido)-5-methylpyrimidin,
3-(p-Aminobenzolsulfonamido)-6-methoxypyridazin,
2-(p-Aminobenzolsulfonamido)-5-methoxypyrimidin,
4-(p-Aminobenzolsulfonamido)-6-methoxypyrimidin,
2-(p-Aminobenzolsulfonamido)-3-methoxypyrazin,
2-(p-Aminobenzolsulfonamido)-4,5-dimethyloxazol,
5-(p-Aminobenzolsulfonamido)-3,4-dimethylisoxazol,
2-Sulfonanilamido-4,6-dimethoxy-1,3,5-triazin,
1,3-Bis-(p-Chlor-4-phenoxyphenyl)-[1H,2H,3H,4H,5H,6H]-1,3,5-triazin-2,4-dion,
4,6-Diamino-1-(p-Chlorphenyl)-1,2-dihydro-2,2-dimethyl-1,3,5-triazin,
5-Allyl-5-isobutyl-2-thiobarbitursäure,
4,6-Dimethyl-2-sulfanilamidopyrimidin,
2,4-Dimethyl-6-sulfanilamidopyrimidin,
5,5-Diallylbarbitursäure,
4-Hydroxy-[1H]-pyrazolo-(3,4,d)pyrimidin,
6-(1-Methyl-4-nitroimidazolyl-5-thio)-purin,
5,5-Diäthylbarbitursäure,
4-Methyl-4-äthylpiperidin-2,6-dion,
3-Benzyl-6-trifluormethyl-7-sulfamoyl-3,4-dihydro-[2H]-1,2,4-benzothiadiazin-1,1-dioxid,
1-{1-[3-(4-Fluorbenzoyl)propyl]-4-piperidyl}benzimidazolon,
2-(2-Methylaminoäthyl)piperidin,
7-Brom-2-oxo-5-(2-pyridyl)-2,3-dihydro-[1H]-1,4-benzodiazepin,
3-Hydroxylmethyl-6-oxo-5-semicarbazono-2,3,5,6-tetrahydroindol,
7-Chlor-2-methylamino-5-phenyl-[3H]-1,4-benzodiazepin-4-oxid,
7-Chlor-4[(4-Diäthylamino-1-methylbutyl)amino]chinolin,
5-Chlor-1,3-benzoxazolon,
5-(2-Chlorphenyl)-7-nitro-2-oxo-2,3-dihydro-[1H]-1,4-benzodiazepin,
2-(2,6-Dichloranilino)-$\Delta^2$-imidazolin,
5-(3-Methylaminopropyl)-10,11-dihydro-[5H]-dibenzo(b,f)azepin,
5-Amino-1,3-bis-(2-äthylhexyl)-5-methylhexahydropyrimidin,
5-Methylisoxazol-3-carbonsäure-($N^2$-benzylhydrazid),
Pyridin-4-carbonsäurehydrazid,
2-(1-Naphthylmethyl)-$\Delta^2$-imidazolin,
8-Amino-2-methyl-4-phenyl-1,2,3,4-tetrahydroisochinolin,
2-(4-tert.-Butyl-3-hydroxy-2,6-dimethylbenzyl)-$\Delta^2$-imidazolin,
2-(2,2-Dicyclohexyläthyl)piperidin,
4-(2-Hydroxy-3-isopropylaminopropyloxy)-indol,
6-Chlor-2-methyl-7-sulfamoyl-3-(2,2,2-trifluorethylmercaptomethyl)-3,4-dihydro-[2H]-1,2,4-benzothiadiazin-1,1-dioxid,

4-Aminobenzolsulfonsäure-(4,5-dimethyl-1,3-oxazol-2-yl-guanid),
3-(4-Aminobenzolsulfonamido)-5-methyl-isoxazol,
4-(4-Aminobenzolsulfonamido)-2,6-dimethyl-piperidin,
2-(4-1,3-Thiazolyl)-benzimidazol,
2-(5-Tetralylamino)-$\Delta^2$-imidazolin,
2-(4-tert.-Butyl-2,6-dimethylbenzyl)-$\Delta^2$-imidazolin,
2,4-Dimethoxy-6-sulfanilamidopyrimidin,
5-6-Dihydro-2-(2,6-xylidino)-[4H]-1,3-thiazin,
Triacetyl-6-azauridin,
1-(4-Chlor-3-sulfamoylbenzamido)-2,6-dimethylpiperidin,
1-Phenyl-5-sulfanilamidopyrazol,
4-(m-Hydroxyphenyl)-1-methyl-4-propionyl-piperidin,
3-[3-(3-Hydroxy-2-piperidyl)acetonyl]-4-[3H]-chinazolon,
4-(4-Diethylamino-1-methylbutylamino)-7-chlorchinolin,
2-(2,2-Dicyclohexylvinyl)piperidin,
1-Methyl-2-(β-hydroxy-β-phenyläthyl)-6-phenacylpiperidin,
Diethylbarbitursäure,
Ethylcyclohexenylbarbitursäure,
Methylcyclohexenylmethylbarbitursäure,
2,6-Dimethyl-3,5-diacetyl-4-o-nitrophenyl-1,4-dihydropyridin,
N-(4'-Chlor-3'-sulfamoylbenzolsulfonyl)-N-methyl-2-aminomethyl-2-methyltetrahydrofuran,
2-(4-Sulfamoylphenyl)tetrahydro-[2H]-1,2-thiazin-1,1-dioxid,
5-Acetamido-2-sulfamoyl-1,3,4-thiazol.

Als Wirkstoffe aus der Reihe der Harnstoffderivate seien genannt:

1-(1-Naphthyl)-2-thioharnstoff,
3-(p-Bromphenyl)-1-methyl-1-methoxy-harnstoff,
3-(p-Chlorphenyl)-1,1-dimethylharnstoff,
3-[p-(p-Chlorphenoxyphenyl)]-1,1-dimethylharnstoff,
1,3-Bis-(1-hydroxy-2,2,2-trichloräthyl)harnstoff,
1,1-Dimethyl-3-[3-(N-tert.-butylcarbamyl-oxy)phenyl]harnstoff,
3-(3,4-Dichlorphenyl)-1,1-dimethylharnstoff,
3-Phenyl-1,1-dimethylharnstoff,
1,1-dimethyl-3-(m-trifluormethylphenyl)harnstoff,
3-(3,4-Dichlorphenyl)-1-methoxy-1-methylharnstoff,
3-(4-Chlorphenyl)-1-methoxy-1-methylharnstoff,
3-(3,4-Dichlorphenyl)-1-n-butyl-1-methylharnstoff,
1-(2-Methylcyclohexyl)-3-phenylharnstoff,
3-(2-Benzothiazolyl)-1-methylharnstoff,
3-(4-Brom-3-chlorphenyl)-1-methoxy-1-methylharnstoff,
3-Cyclooctyl-1,1-dimethylharnstoff,
3-(3-Methylphenyl)-1,1-dimethylthioharnstoff,
3-[5-(3a,4,5,6,7,7a-hexahydro-4,7-methanindanyl)]-1,1-dimethylharnstoff,
1,3-Dimethyl-3-(2-benzthiazolyl)harnstoff,
3-[3-Chlor-4-(2'-chlor-4'-nitrophen-oxy)phenyl]-1-(2,2'-dichlorbenzoyl)harnstoff,
3-[4-(2-Chlor-4-trifluormethylphen-oxy)phenyl]-1-(2,2'-difluorbenzoyl)harnstoff,
3-[4-(2-Chlor-4-trifluormethylphen-oxy)phenyl]-1-o-chlorbenzoylharnstoff,
3-(4-Chlorphenyl)-1-(2,2'-difluor-benzoyl)harnstoff,
3-(4-Nitrophenyl)-1-(2,2'-difluor-benzoyl)harnstoff,
3-(4-Trifluormethoxyphenyl)-1-o-fluorbenzoyl-harnstoff,
3-(4-Trifluormethoxyphenyl)-1-(2,2-dichlorbenzoyl)harnstoff,
1,3-Bis-(3,4-Dichlorphenyl)harnstoff,
Phenylthioharnstoff,
1,3-Bis-(4-Dichlorphenyl)harnstoff,
1-p-Chlorphenyl-3-o-chlorphenylharnstoff,
1-p-Chlorphenyl-3-o,m-dichlorphenylharnstoff,
1-p-Chlorphenyl-3-o,p-dichlorphenylharnstoff,
1-p-Chlorphenyl-3-(2,5-dichlorphenyl)harnstoff,
1-Hydroxymethyl-3-methyl-2-thioharnstoff,
2-Äthylisothioharnstoff,
Allylthioharnstoff,
N,N-Dimethylbiguanid,
5-Nitro-2-furaldehydsemicarbazon,
1-Äthyl-3-(5-nitro-2-thiazolyl)harnstoff,
2-Äthyl-cis-crotonylharnstoff,
α-Äthyl-α-brombutyrylharnstoff,
α-Chlorphenylacetylharnstoff,
p-Ethoxyphenylharnstoff,
Vanillinthiosemicarbazon,
N-Acetyl-N'-diäthylbromacetylharnstoff,
2-Isopropyl-4-pentenoylharnstoff,
p-Acetamidobenzaldehydthiosemicarbazon,
1-(p-Chlorphenylsulfonyl)-3-propylharnstoff,
2-Phenylbutyrylharnstoff,
p-(3-Äthylureido)benzaldehydthiosemicarbazon,
1-Butyl-3-sulfanilylharnstoff,
Phenyläthylmalonylharnstoff,
N,N'-(m-Amidinophenyl)harnstoff,
p-Cinnamoyloxyphenylharnstoff,
1-(Hexahydro-[1H]-azepin-1-yl)-3-{p[5-(methyl-3-isoxazolcarboxamido)äthyl]phenylsulfonyl}harnstoff,
N-Acetyl-N'-(2,2-Diäthyl-2-Brom)acetyl-harnstoff,
α-Bromisovaleroylharnstoff,
2-β-Aminoäthylisothioharnstoff.

Als Wirkstoffe aus der Reihe der Carbamate seien genannt:

4-Benzothienyl-N-methylcarbamat,
1-Naphthyl-N-methylcarbamat,
2-Chlorphenyl-N-methylcarbamat,
Isopropyl-N-(m-chlorphenyl)carbamat,
3,4-Dimethyl-N-methylcarbamat,
4-Dimethylamino-3,5-xylyl-N-methylcarbamat,
2,6,Di-tert.-butyl-p-tolyl-N-methylcarbamat,
3-(1-Methylbutyl)phenyl-N-methylcarbamat,
3-Isopropylphenyl-N-methylcarbamat,
4-(Methylthio)-3,5-xylyl-N-methylcarbamat,

N-3,4-Dichlorphenyl-O-methylcarbamat,
N-Phenyl-O-isopropylcarbamat,
2-Isopropoxyphenyl-N-methylcarbamat,
m-Tolyl-N-methylcarbamat,
3,4-Xylyl-6-Chlor-4-methylcarbamat,
O-Methyl-N-4-aminobenzolsulfonylcarbamat,
1-Methylprop-2-inyl-N-(3-chlorphenyl)carbamat,
2,3-Dihydro-2,2-dimethyl-7-benzofuranyl-N-methylcarbamat,
2-Isopropylphenyl-N-methylcarbamat,
3,5-Dimethyl-4-methylmercaptophenyl-N-methylcarbamat,
2-Chlorphenyl-N-o,o'-difluorbenzoylcarbamat,
4-Chlorphenyl-N-o,o'-difluorbenzoylcarbamat,
Methyl-N-o,o'-difluorbenzoylcarbamat,
Isopropyl-N-o,o'-difluorbenzoylcarbamat,
2,6-Dichlorphenyl-N-o,o'-difluorbenzoylcarbamat,
2,6-Dichlorphenyl-N-o,o'-dichlorbenzoylcarbamat,
2-Nitrophenyl-N-o,o'-difluorbenzoylcarbamat,
4-Nitrophenyl-N-o,o'-difluorbenzoylcarbamat,
2-Nitro-4-chlorphenyl-N-o,o'-difluorbenzoylcarbamat,
2-Chlor-4-nitrophenyl-N-o,o'-difluorbenzoylcarbamat,
N-o,o'-Difluorbenzoyl-S-p-chlorphenylcarbaminicacidthioester,
1-Methyl-5-nitroazol-2-yl-methylcarbamat,
1-Äthyl-1-methylpropylcarbamat,
3-Methyl-2,4-pentandioldicarbamat,
1-Äthinylcyclohexylcarbamat,
2-Methyl-2,n-propyl-1,3-propandioldicarbamat,
α-Äthinylbenzylcarbamat,
3-(p-Chlorphenoxy)-2-hydroxypropylcarbamat,
α-Methylphenylethylcarbamat,
2-Hydroxyäthyl-N-benzylcarbamat,
1-Cyclohexylpropylcarbamat,
α-Isopropylbenzylcarbamat,
(2-Methyl-2-nonyl-1,3-dioxolan-4-yl)-methylcarbamat,
2-Methyl-2-propylpropan-1,3-dioldicarbamat.

Als Wirkstoffe aus der Reihe der Carbon-, Sulfon- und Phosphorsäurederivate seien genannt:

N-[2-Mercaptoäthylbenzolsulfonamid-S(O,O'-diisopropylphosphordithioat)] 4-Tert.-butyl-2-chlorphenyl-O,N-dimethylphosphorimidat,
3-Amino-2,5-dichlorbenzoesäure,
N-(3-Chlor-4-methylphenyl)-2-methylpentanamid,
O,O-Dimethyl-(2,2,2-trichlorhydroxyethyl)phosphonat,
5,2'-Dichlor-4'-nitrosalicylanilidäthanolamin,
O,O-Dimethyl-S-(N-methylcarbamoylmethyl)thiophosphat,
O-Äthyl-O-(3-methyl-4-methylthiophenyl)isopropylamidophosphat,
3,4-Dichlorphenylpropionanilid,
5-Methyl-1,3,4-thiadiazol-2-sulfonamid,
L-2-Amino-3-(N-nitrosohydroxyamino)propionsäure,
Pyrazol-1-carboxamid,
Pyrazol-1-thiocarboxamid,
2-Acetylamino-1,3,4-thiadiazol-5-sulfonamid,
Pyrazincarboxamid,
5-Acetylimino-4-methyl-$\Delta^2$-1,3,4-thiadiazolin-2-sulfonamid,
Pyridin-3-carboxamid,
4-Amino-3-jodbenzolsulfonamid,
Pyridin-4-carbonsäurehydrazid,
p-Aminobenzolsulfonamid,
2-Methyl-4-aminopyrimidin-5-carbonsäurehydrazid,
α-Aminotoluol-p-sulfonamid,
2-Äthylisonicotinsäurethioamid,
α,α-Dichlor-N-[β-(hydroxymethyl)-p-nitrophenacyl]acetamid,
D(−)-threo-N-(β-Hydroxy-α-hydroxymethyl-p-nitrophenyläthyl)dichloracetamid,
D(−)-threo-N-(β-Hydroxy-α-hydroxymethyl-p-nitrophenyläthyl)azidoacetamid,
N-Sulfanilyl-3-methyl-2-butenamid,
N-(2-Chlor-4-nitrophenyl)-5-chlorsalicylamid,
p-Aminosalicylsäurephenylester,
4-Chlor-$N^1$-methyl-$N^1$-(2-methyltetrahydrofurfuryl)-m-benzoldisulfonamid,
2-Diäthylaminoäthyl-p-aminobenzoat,
2-(Diethylaminoacetylamino)-3-methylbenzoesäuremethylester,
2-Äthyl-6-methyl-α-diäthylaminoacetanilid,
β-Dimethylaminoäthyl-p-butylaminobenzoat,
D-7-(2-Amino-2-phenylacetamido)-3-methyl-8-oxo-5-thia-1-azabicyclo(4.2.0)-oct-2-en-2-carbonsäure,
β-Diäthylaminoäthyl-3-amino-4-propoxybenzoat,
7-Chlor-4-dimethylamino-1,4,4a,5,5a,6,11,12a-oktahydro-3,6,10,12,12a-pentahydroxy-1,11-dioxo-2-naphthacencarboxamid,
2,2-Diallyl-N,N'-bis-(4-Amino-2-methyl-6-chinolyl)malonamid,
4-Methyl-3-(2-propylaminopropionylamino)thiophen-2-carbonsäuremethylester,
4-Chlor-5-sulfamoylsalicylsäure-2,6-dimethylanilid.

Als Wirkstoffe aus der Reihe der Naturstoffe seien insbesondere genannt:

2-Äthylisonicotinthioamid, 5-Hydroxytryptamin,
(−)-3-(3,4-Dihydroxyphenyl)-2-methylalanin,
7-(2,3-Dihydroxypropyl)theophyllin,
α-1-(Methylaminoäthyl)benzylalkohol,
DL-α-Methyltryptamin,
4-(2,2'-Dichloräthylamino)prolinäthylester,
p-[Bis-(2-chloräthyl)amino]-L-phenylalanin,
D-4-Amino-4-carboxybutylpenicillin,
2',4-Epoxy-3-(4'-hydroxyphenyl)-7-hydroxycumarin,
4-Hydroxybenzylpenicillin,
6-[D(−)-α-Aminophenylacetamido)]penicillansäure,
7-(5-Amino-5-carboxyvaleramido)cephalosporansäure,
6-(3-Amino-2-phenylpropionamido)penicillansäure,
6-(α-Phenoxybutyramido)penicillansäure,
7-[2-(α-Methylphenäthyl-amino)äthyl]theophyllin,
N-(2-Hydroxy-1-methyläthyl)-D-(+)-lysergamid,

4-Chlor-17β-hydroxyandrost-4-en-3-on,
$N^2$-{p-[1-(2-Amino-4-hydroxy-6-pteridinyl)äthylmethylamino]benzoyl}glutamin,
1,4-Pregnadien-17α-21-diol-3,11,20-trion,
7-Chlor-4-dimethylamino-1,4,4a,5,5a,6,11,12a-oktahydro-3,6,10,12,12a-pentahydroxy-6-methyl-1,11-dioxo-2-naphthacencarboxamid,
9-Acetyl-7,8,9,10-tetrahydro-6,7,9,11-tetrahydroxy-4-methoxy-5,12-naphthacenchinon-7-(3-amino-5-methyl)-2,3-didesoxy-L-lyxopyranosid,
2α-11,Dimethoxy-3-(3,4,5-trimethoxybenzoyloxy)yohimban-1-carbonsäuremethylester,
O-[2,6-Diamino-2,3,4,6-tetradesoxy-D-glycerohex-4-enpyranosyl-(1 → 4)]-O-[3-desoxy-4-C-methyl-3-methylamino-β-L-arabinopyranosyl-(1 → 6)]-2-desoxy-D-streptamin,
1-β-D-Arabinofuranosylcytosin-5'-(1-adamantancarboxylat),
6-Aminopenicillansäure,
D-α-Aminobenzoylaminopenicillansäure,
L-3-(3,4-Dihydroxyphenyl)-2-methylalanin,
6-[(R)-2-(2-Oxoimidazolidin-1-carboxamido)-2-phenylacetamido]penicillansäure,
7-(D-α-Aminophenylacetamido)-3-methyl-3-cephem-4-carbonsäure,
7-[2-(1-Methyl-2-phenylethylamino)äthyl]theophyllin.

Bei der Durchführung des erfindungsgemässen Verfahrens gemäss Variante a geht man vorteilhaft in der nachstehend beschriebenen Weise vor.

Der OH-terminierte Äthylenoxidpolyäther wird in einem Lösemittel z.B. in Toluol gelöst. In diese Lösung wird bei Raumtemperatur die berechnete Menge Phosgen eingeleitet. Durch anschliessendes Erhitzen wird die Umsetzung vervollständigt; gleichzeitig wird durch Durchblasen eines Inertgases wie Stickstoff die Hauptmenge der bei der Reaktion entstehenden Salzäure entfernt. In die Lösung des Chlorameisensäureesters wird dann der zu modifizierende Wirkstoff in gelöster Form zugegeben. Die Mischung wird dann erneut unter Durchblasen von trockenem Stickstoff auf 100 bis 150°C (je nach dem gewählten Lösungsmittel) aufgeheizt, und die Umsetzung auf diese Weise vervollständigt. Im Reaktionsansatz verbliebene Salzsäure wird nach Abkühlen durch Zugabe von Natronlauge neutralisiert. Das entstandene Kochsalz wird abgetrennt und der erfindungsgemäss modifizierte neue Wirkstoff wird durch Abdestillieren des Lösungsmittels isoliert. Schematisch lässt sich die Reaktion durch nachfolgende idealisierte Formelbilder wiedergeben:

Verfahrensvariante a)

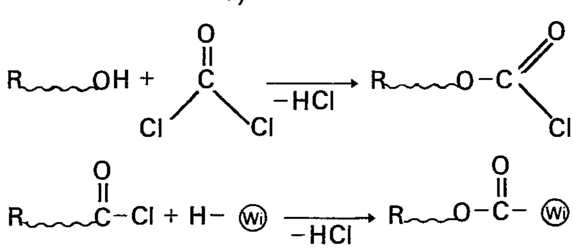


wobei H– Wi der biologisch aktive Wirkstoff sei.

Bei der Durchführung des erfindungsgemässen Verfahrens gemäss Variante b) geht man vorteilhaft in der nachstehend beschriebenen Weise vor:

Phosgen wird in einem inerten Lösemittel z.B. Toluol gelöst. In diese Lösung wird anschliessend der modifizierte Wirkstoff in gelöster Form zugegeben. Durch Reaktion des Phosgens und den Zerewitinoff-aktiven Wasserstoffatomen des Wirkstoffs entsteht eine Mischung aus Carbaminsäureester des eingesetzten Wirkstoffs. In diese Mischung wird dann der monofunktionelle Äthylenoxidpolyäther in gelöster Form eingetropft. Unter Durchleiten von Stickstoff und Aufheizen auf Siedetemperatur wird die Umsetzung vervollständigt und die entstandene Salzsäure weitgehend ausgeblasen.

In der Siedehitze des hier beispielhaft genannten Lösemittels Toluol bildet sich eine klare Lösung, aus welcher auch nach Abkühlen kein Niederschlag ausfällt. Die im Reaktionsansatz verbliebene Salzsäure wird durch Zugabe von Natronlauge neutralisiert.

Das entstandene Kochsalz wird abgetrennt und der erfindungsgemäss modifizierte neue Wirkstoff durch Abdestillieren des Lösemittels isoliert.

Schematisch lässt sich diese Umsetzung durch folgende idealisierte Formeln wiedergeben:

Verfahrensvariante b)

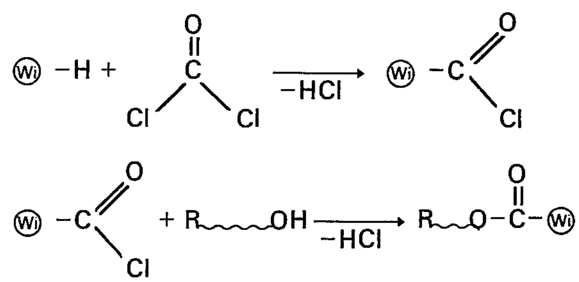


wobei H– Wi der biologisch aktive Wirkstoff sei.

Bei der Durchführung des Verfahrens gemäss Variante c) geht man vorteilhaft in der nachstehend beschriebenen Weise vor:

Eine Lösung von Phosgen in einem inerten Lösemittel (z.B. Toluol) wird bei Raumtemperatur mit einer Lösung von dem zu modifizierenden Wirkstoff und dem Äthylenoxidpolyäther gemischt. Sofort nach der Mischung bildet sich ein farbloser Niederschlag, welcher sich beim anschliessenden Erwärmen auf Siedetemperatur des Lösemittels wieder auflöst. Durch die siedende Mischung wird zur Entfernung der entstehenden Salzsäure ein Inertgas wie Stickstoff geblasen. Nach 1 bis 2 h Reaktionszeit wird abgekühlt.

Die Lösung bleibt nach Abkühlen klar, es fällt kein Niederschlag aus.

Die im Reaktionsansatz verbliebene Salzsäure wird durch Zugabe von Natronlauge neutralisiert, das entstandene Kochsalz abgetrennt und der erfindungsgemäss modifizierte neue Wirkstoff durch Abdestillieren des Lösemittels isoliert.

Diese Umsetzung lässt sich schematisch durch folgende idealisierte Formeln wiedergeben:

Verfahrensvariante c)

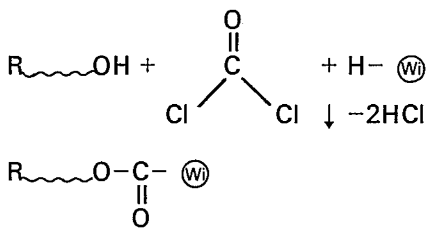


wobei H- (Wi) der biologisch aktive Wirkstoff sei.

Einige spezielle Ausführungsformen der einzelnen erfindungsgemässen Verfahrensvarianten werden nachfolgend beschrieben:

Verwendet man beispielsweise einen auf n-Butanol gestarten Äthylenoxidpolyäther mit einer endständigen $NH_2$-Gruppe, dessen Herstellung beispielsweise in der DE-AS Nr. 1215373 oder US-PS Nr. 3155278 beschrieben ist, überführt diesen durch Umsetzung mit Phosgen [vgl. W. Siefken, „Ann. Chem." *562*, 75-136 (1949)] in die gegenüber Zerewitinoff-aktiven Wasserstoffatomen reaktive Isocyanatform und verwendet als Wirkstoff 4-Amino-6-tert.-butyl-3-(methylthio)-1,2,4-triazin-5-[4H]-on, so ist das erfindungsgemässe Verfahren wie folgt durchzuführen:

Das Polyätherisocyanat wird bei einer Temperatur von 25 bis 150°C, bevorzugt 80 bis 140°C und unter Feuchtigkeitsausschluss mit dem Wirkstoff umgesetzt, wobei der Wirkstoff in einem inerten Lösungsmittel gelöst sein kann. Die Reaktion ist vollständig abgelaufen, wenn in der Reaktionsmischung IR-spektroskopisch kein Isocyanat mehr nachgewiesen werden kann. Der modifizierte Wirkstoff hat die allgemein idealisierte Formel (III)

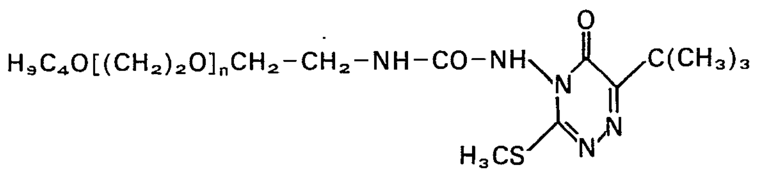

(III)

in welcher n die oben angegebene Bedeutung hat.

Eine weitere Möglichkeit zur Durchführung des erfindungsgemässen Verfahrens besteht in der Verwendung eines Polyätherkohlensäurehalbesterchlorids, welches nach bekannten Verfahren aus der Umsetzung eines Polyäthers mit einer Hydroxylendgruppe mit Phosgen bei 20 bis 120°C, bevorzugt 20 bis 40°C erhältlich ist (vgl. Houben-Weyl, „Methoden der organischen Chemie" VIII, S. 101-105). Zur Herstellung des Polyätherchlorkohlensäurehalbesters bietet sich dabei das nachstehend beschriebene bekannte Verfahren an.

Man geht aus von einem Polyäther mit Hydroxylendgruppe. Diese Verbindung wird gegebenenfalls in einem geeigneten organischen Lösungsmittel, mit Phosgen umgesetzt. Dazu wird zwischen 1/2 und 10 h Phosgen durch die Lösung bzw. durch den Polyäther geleitet, während gleichzeitig die Mischung durch externe Kühlung auf Raumtemperatur gehalten wird. Anschliessend wird auf 80 bis 150°C, bevorzugt 100 bis 120°C erhitzt, wodurch die Umsetzung vervollständigt und überschüssiges Phosgen entfernt wird. Zu diesem Zeitpunkt liegt der Polyätherchlorkohlensäurehalbester in zur weiteren Umsetzung mit dem Wirkstoff genügend reiner Form vor.

Bei dieser Umsetzung mit dem Wirkstoff, insbesondere einer NH-funktionellen Verbindung, geht man vorzugsweise in nachstehend beschriebener Art vor. In einer Vorstufe wird der Monochlorkohlensäuremonokohlensäurepolyätherester mit äquivalenten Mengen Methanol zum Kohlensäuremethylesterkohlensäurepolyätherester umgesetzt. Derartige Veresterungen mit Methanol als Alkoholkomponente sind bekannt.

In der dieser Vorreaktion unmittelbar folgenden Reaktion wird der Kohlensäuremethylesterkohlensäurepolyätherester in einem geeigneten organischen Lösungsmittel bei einer Temperatur, welche ausreicht, entstehendes Methanol abdestillieren zu lassen, bevorzugt zwischen 80 und 140°C, mit der Wirkstoffkomponente, im Falle einer NH-funktionellen Verbindung zum entsprechenden Urethan, umgesetzt. Dabei ist es häufig von besonderem Vorteil, bei der Reaktion katalytische Mengen eines Alkalimetalls, insbesondere Natrium, zuzugeben, da hierdurch die Reaktionszeiten erheblich verkürzt werden können. Die Reaktion ist beendet, wenn kein Methanol mehr abdestilliert werden kann, üblicherweise nach 1 bis 24 h. Man lässt dann abkühlen, entfernt das Lösungsmittel und kristallisiert gegebenenfalls den entstandenen, nach dem erfindungsgemässen Verfahren modifizierten Wirkstoff um.

Im Falle der Verwendung eines auf n-Butanol gestarteten Äthylenoxidpolyäthers mit OH-Endgruppen, welches in vorstehend beschriebener Weise zum Kohlensäuremethylesterpolyätherester umgesetzt wurde, und 1-Amino-3-(1-Methylpropyl)-5-brom-6-methyl-1,3-diozin-[5H]-2,4-dion als Wirkstoff lässt sich die oben angegebene Verfahrensweise durch folgendes Reaktionsschema darstellen:

Stufe 1:

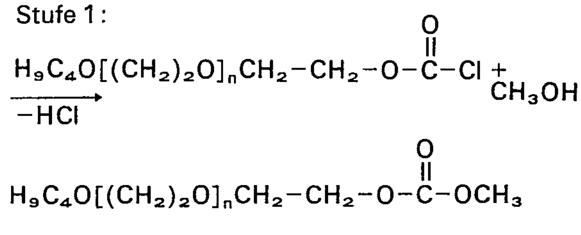


Stufe 2:

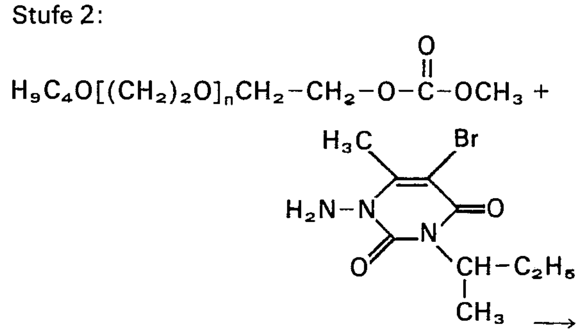

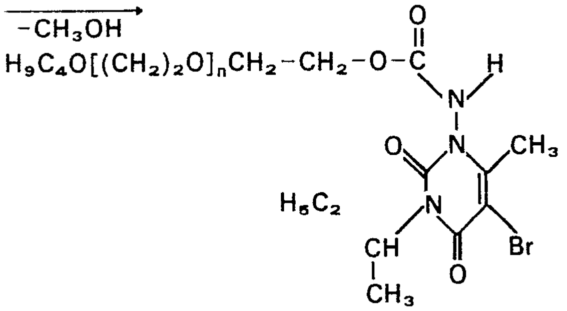

wobei n die oben angegebene Bedeutung hat.

Als Verdünnungs- bzw. Lösungsmittel können bei dem erfindungsgemässen Verfahren alle inerten organischen Lösungsmittel in Frage kommen. Hierzu gehören vorzugsweise Benzol, Toluol, Xylol, Methylenchlorid, Chloroform, Chlorbenzol, Diethyläther, Dibutyläther, Dioxan sowie Aceton, Methylethylketon, Essigsäureethylester und Acetonitril.

Wie bereits erwähnt, sind die nach dem erfindungsgemässen Verfahren modifizierten Wirkstoffe bei gleichbleibender verbesserter oder erweiterter biologischer Aktivität besser in Wasser oder niederen aliphatischen Alkoholen löslich als die unmodifizierten Wirkstoffe. Sie lassen sich daher einfacher und preiswerter einsetzen, da keine oder weniger Lösungsvermittler zur Herstellung der anwendungsfertigen Mittel erforderlich sind.

Die verbesserte Wasserlöslichkeit bewirkt ausserdem, dass auch bis dahin nicht-systemisch einsetzbare Wirkstoffe auf dem Gebiet des Pflanzenschutzes systemisch eingesetzt werden können, da sie nun durch den Saftstrom der Pflanze transportiert werden können.

Herstellungsbeispiele:

Variante a)

*Beispiel 1*

607 g (0,3 mol) eines auf n-Butanol gestarteten Äthylenoxidpolyäthers vom mittleren Molgewicht 2025 (mittlere Anzahl an Äthylenoxideinheiten n=42) mit endständiger NCO-Gruppe (NCO-Gehalt: 2,07 Gew.%) werden bei 50°C in einer feuchtigkeitsfreien Rührapparatur vorgelegt. Unter schnellem Rühren werden innerhalb von 2 h 64 g (0,3 mol) 4-Amino-6-tert.-butyl-3-(methylthio)-1,2,4-triazin-5-[4H]-on, welches in 100 ml absolutem Toluol gelöst ist, zugetropft. Nach Ende des Zutropfens wird solange bei 80°C nachgerührt, bis IR-spektroskopisch kein NCO in der Reaktionsmischung mehr nachgewiesen werden kann (10 min.). Anschliessend wird im Vakuum das Lösungsmittel abdestilliert.

Man erhält 658 g eines dunkelgelben Feststoffes. Dieser erfindungsgemäss modifizierte neue Wirkstoff ist sehr gut in Wasser und/oder niederen Alkohlen löslich und besitzt die idealisierte Formel:

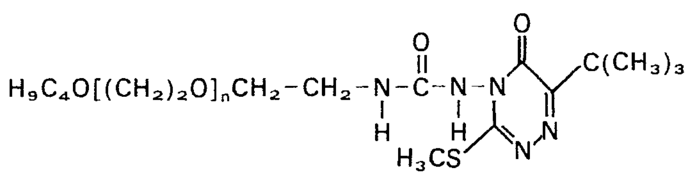

n=42.

*Beispiel 2*

1031 g (0,5 mol) eines auf n-Butanol gestarteten Äthylenoxidpolyäthers vom mittleren Molgewicht 2058 (mittlere Anzahl an Äthylenoxideinheiten n=42) mit endständiger Methoxycarbonylgruppe werden bei 110°C vorgelegt. Innerhalb von 2 h lässt man eine Lösung von 106,5 g 4-Amino-6-tert.-butyl-3-(methylthio)-1,2,4-triazin-5[4H]-on in 500 ml Toluol zutropfen. Entstehendes Methanol wird während des Zutropfens und nachher bis zum Ende der Reaktion über einen Clisenaufsatz abdestilliert. Anschliessend wird die Temperatur auf 130°C im Bad erhöht und das Lösungsmittel abdestilliert. Man lässt weitere 7 h bei 105°C nachrühren. Anschliessend lässt man auf 80°C abkühlen und evakuiert auf 25 mbar, wodurch letzte Spuren an Methanol und Lösungsmittel entfernt werden. Man kühlt auf Raumtemperatur ab, belüftet mit Stickstoff und erhält 1132 g eines braunroten Feststoffes. Dieser erfindungsgemäss modifizierte neue Wirkstoff ist gut in Wasser und/oder niederen Alkoholen löslich und besitzt die idealisierte Formel:

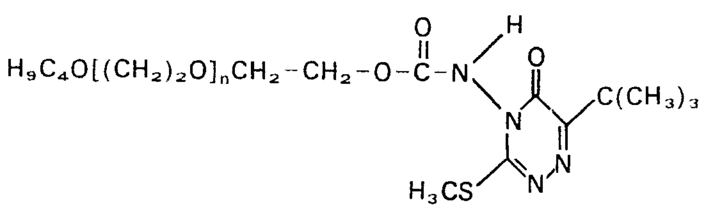

n=42.

*Beispiel 3*

Variante a)

200 g (0,1 mol) eines auf n-Butanol gestarteten Äthylenoxidpolyäthers vom mittleren Molgewicht 2000 (mittlere Anzahl an Äthylenoxideinheiten n=44) mit endständiger Primäre-OH-Gruppe werden in 300 g Toluol gelöst. Bei Normaldruck werden dann 100 g Toluol abdestilliert. In diese Lösung werden anschliessend 13 g (0,13 mol) Phosgen eingeleitet. Dabei steigt die Reaktions-

temperatur von Zimmertemperatur bis auf 35°C. Die Mischung wird anschliessend unter Rühren und Durchblasen von trockenem Stickstoff auf 110°C aufgeheitzt und bei dieser Temperatur 30 min gehalten. Danach wird die Mischung auf Raumtemperatur abgekühlt und eine vorbereitete Lösung von 21,4 g (0,1 mol) 4-Amino-6-tert.-butyl-3-(methylthio)-1,2,4-triazin-5[4H]-on in 150 g Toluol rasch zugetropft. Die Reaktionstemperatur steigt dabei auf 25°C an. Anschliessend wird das Reaktionsgemisch wieder auf 110°C aufgeheizt und unter Rühren und Durchblasen von Stickstoff 1 h bei 110°C belassen. Nach Abkühlen wird durch Zugabe von 6,5 ml 40%iger Natronlauge die entstandene Salzsäure neutralisiert. Wasser und Toluol werden bei 60°C im Wasserstrahlvakuum abdestilliert. Die Reaktionsmischung wird durch erneute Zugabe von 300 g Toluol verdünnt und durch Absaugen vom ausgefallenen Natriumchlorid befreit. Die klare Lösung des modifizierten Wirkstoffs wird anschliessend eingeengt. Man erhält 192 g modifizierten Wirkstoff von Fp. 48,5 bis 49°C.

Dieser erfindungsgemäss modifizierte neue Wirkstoff ist gut in Wasser und/oder niederen Alkoholen und/oder Aceton löslich und besitzt die idealisierte Formel

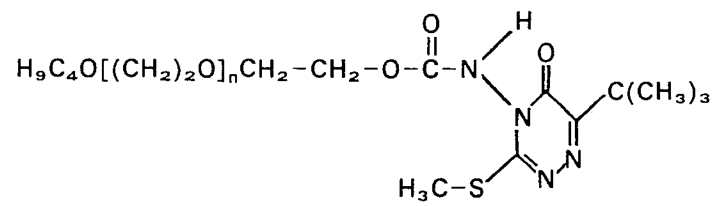

n=43.

*Beispiel 4*

Variante b)

10 g (0,1 mol) Phosgen werden in 150 g Toluol gelöst. In diese Lösung wird eine vorbereitete Lösung von 21,4 g (0,1 mol) 4-Amino-6-tert.-butyl-3-(methylthio)-1,2,4-triazin-5[4H]-on in 150 g Toluol eingetropft. Dabei bildet sich sofort ein farbloser Niederschlag. Die Mischung wird 2 h bei Raumtemperatur gerührt. Anschliessend wird eine vorbereitete Lösung von 200 g des in Beispiel 3 beschriebenen Äthylenoxidpolyäthers in 200 g Toluol die Reaktionsmischung eingetropft. Nach Zugabe wird die Mischung unter Durchleiten von trockenem Stickstoff auf 110°C aufgeheizt. Dabei bildet sich eine klare Lösung. Die Mischung wird 1 h am Rückfluss erhitzt.

Nach Abkühlen wird durch Zugabe von 6,5 ml 40%iger Natronlauge die entstandene Salzsäure neutralisiert. Wasser und Toluol werden bei 60°C im Wasserstrahlvakuum abdestilliert. Die Reaktionsmischung wird durch erneute Zugabe von 300 g Toluol verdünnt und durch Absaugen vom ausgefallenen Natriumchlorid befreit. Die klare Lösung des modifizierten Wirkstoffs wird anschliessend eingeengt. Man erhält 207 g modifizierten Wirkstoff vom Fp. 47 bis 48°C. Der erfindungsgemäss modifizierte neue Wirkstoff ist gut in Wasser und/oder niedermolekularen Alkoholen und/oder Aceton löslich.

*Beispiel 5*

Variante c)

150 g Toluol werden in einem Kolben mit Rührer, Rückflusskühler, Tropftrichter und Einleitungsrohr vorgelegt. In das vorgelegte Toluol werden 10 g (0,1 mol) Phosgen gelöst. In diese Phosgenlösung wird eine vorbereitete Mischung aus 21,4 g (0,1 mol) 4-Amino-6-tert.-butyl-3-(methylthio)-1,2,4-triazin-5(4H)-on und 200 g (0,1 mol) trockenem Äthylenoxidpolyäther aus Beispiel 3, die in 200 g Toluol klar gelöst ist, zugetropft. Während der Zugabe bildet sich ein farbloser Niederschlag. Nach vollständiger Zugabe wird die Mischung unter Durchleiten von Stickstoff auf 110°C erhitzt und 1 h am Rückfluss gehalten. Bei der Siedetemperatur entsteht eine klare Lösung.

Nach Abkühlen wird die Mischung mit 6,5 ml 40%iger Natronlauge versetzt. Der Reaktionsansatz wird anschliessend wie in Beispiel 4 beschrieben aufgearbeitet. Man erhält 212 g des erfindungsgemäss modifizierten Wirkstoffs vom Fp. 48 bis 51°C. Der erfindungsgemäss modifizierte neue Wirkstoff ist gut in Wasser und/oder niedermolekularen Alkoholen und/oder Aceton löslich.

**Patentansprüche**

1. Verbindungen, dadurch gekennzeichnet, dass man bilogisch aktive Wirkstoffe mit mindestens einem Zerewitinoff-aktiven Wirkstoffatom mit einem OH-, NH- oder $NH_2$- monofunktionellen hydrophilen Polyäther mit einem Wasseraufnahmevermögen von mindestens 10%, bezogen auf das Gewicht des Polyäthers und einer Verbindung der Formel (II)

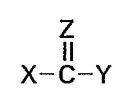

(II)

in welcher

X und Y gleich oder verschieden sind und für Halogen, Halogenalkoxy, Alkoxy, Alkylmercapto, Halogenalkylmercapto, Aryloxy oder gemeinsam für Alkylendioxy stehen, und

Z für −O−, −S−, >N+R steht,

wobei R für lineares oder verzweigtes Alkyl mit 1 bis 18 C-Atomen oder für gegebenenfalls ein- oder mehrfach durch Halogen, Alkyl, Alkoxy, Alkylmercapto, Halogenalkyl, Halogenalkylmercapto, Phenoxy substituiertes Phenyl oder Naphthyl steht, umsetzt, wobei entweder

a) zunächst der Polyäther mit der Verbindung der Formel (II) im Äquivalentverhältnis 1:1 umgesetzt wird und die so erhaltene Verbindung im Molverhältnis 1:1 mit dem Wirkstoff umgesetzt wird oder

b) der Wirkstoff mit der Verbindung der Formel (II) im Äquivalentverhältnis 1:1 umgesetzt wird und die erhaltene Verbindung mit dem Polyäther umgesetzt wird oder

c) Wirkstoff, Polyäther und Verbindung der Formel (II) im Äquivalentverhältnis 1:1:1 umgesetzt werden.

2. Verfahren zur Herstellung von Verbindung gemäss Anspruch 1, dadurch gekennzeichnet, dass man biologisch aktive Wirkstoffe mit mindestens einem Zerewitinoff-aktiven Wasserstoffatom mit einem OH-, NH- oder $NH_2$-monofunktionellen hydrophilen Polyäther mit einem Wasseraufnahmevermögen von mindestens 10%, bezogen auf das Gewicht des Polyäthers und einer Verbindung der Formel (II)

$$X-\overset{\overset{\displaystyle Z}{\|}}{C}-Y \qquad (II)$$

in welcher

X und Y gleich oder verschieden sind und für Halogen, Alkyl mit 1 bis 6 C-Atomen, Halogenalkoxy, Alkoxy, Alkylmercapto, Halogenalkylmercapto, Aryloxy oder gemeinsam für Alkylendioxy stehen, und

Z für $-O-$, $-S-$, $>N-R$ steht,

wobei R für lineares oder verzweigtes Alkyl mit 1 bis 18 C-Atomen oder für gegebenenfalls ein- oder mehrfach durch Halogen, Alkyl, Alkoxy, Alkylmercapto, Halogenalkyl, Halogenalkylmercapto, Phenoxy substituiertes Phenyl oder Naphthyl steht,

in einem inerten Lösungsmittel umsetzt, wobei entwender

a) zunächst der Polyäther mit der organischen Verbindung im Äquivalentverhältnis 1:1 umgesetzt wird und die so erhaltene Verbindung im Molverhältnis 1:1 mit dem Wirkstoff umgesetzt wird oder

b) der Wirkstoff mit der organischen Verbindung der Formel (II) im Äquivalentverhältnis 1:1 umgesetzt wird und die erhaltene Verbindung mit dem Polyäther umgesetzt wird oder

c) Wirkstoff, Polyäther und Verbindung der Formel (II) im Äquivalentverhältnis 1:1:1 umgesetzt werden.

3. Verwendung der Verbindungen gemäss Anspruch 1 als biologisch aktive Wirkstoffe mit in Wasser und niederen aliphatischen Alkoholen verbesserter Löslichkeit.

## Revendications

1. Composés, caractérisés en ce qu'on fait réagir des produits biologiquement actifs ayant au moins un atome d'hydrogène actif de Zerewitinoff avec un polyéther hydrophile OH-, HN- ou $NH_2$-monofonctionnel ayant une capacité d'absorption d'eau d'au moins 10% par rapport au poids du polyéther, et un composé de formule (II)

$$X-\overset{\overset{\displaystyle Z}{\|}}{C}-Y \qquad (II)$$

dans laquelle

X et Y sont indentiques ou différents et représentent un halogène ou un groupe halogénoalcoxy, alcoxy, alkylmercapto, halogénoalkylmercapto, aryloxy, ou bien X et Y représentent ensemble un groupe alkylènedioxy, et

Z représente $-O-$, $-S-$ ou $>N-R$,

où R représente un groupe alkyle à chaîne droite ou ramifiée en $C_1$-$C_{18}$ ou un groupe phényle ou naphtyle éventuellement mono- ou polysubstitué par un halogène ou un groupe alkyle, alcoxy, alkylmercapto, halogénoalkyle, halogénoalkylmercapto, phénoxy,

et en ce que, ou bien

a) on fait d'abord réagir le polyéther avec le composé de formule (II) dans un rapport d'équivalents de 1:1 et on fait réagir le composé ainsi obtenu dans le rapport molaire 1:1 avec le produit actif, ou bien

b) on fait réagir le produit actif avec le composé de formule (II) dans le rapport d'équivalents de 1:1 et on fait réagir le produit obtenu avec le polyéther; ou bien

c) on fait réagir le produit actif, le polyéther et le composé de formule (II) dans un rapport d'équivalents 1:1:1.

2. Procédé pour la préparation des composés selon la revendication 1, caractérisé en ce que l'on fait réagir dans un solvant inerte des produits biologiquement actifs ayant au moins un atome d'hydrogène actif de Zerewitinoff avec un polyéther hydrophile OH-, NH- ou $NH_2$-monofonctionnel ayant une capacité d'absorption d'eau d'au moins 10%, par rapport au poids du polyéther, avec un composé de formule (II)

$$X-\overset{\overset{\displaystyle Z}{\|}}{C}-Y \qquad (II)$$

dans laquelle

X et Y sont indentiques ou différents et représentent un halogène ou un groupe halogénoalcoxy, alcoxy, alkylmercapto, halogénoalkylmercapto, aryloxy, ou bien X et Y représentent ensemble un groupe alkylènedioxy, et

Z représente $-O-$, $-S-$ ou $>N-R$,

où R représente un groupe alkyle à chaîne droite ou ramifiée en $C_1$-$C_{18}$ ou un groupe phényle ou naphtyle éventuellement mono- ou polysubstitué par un halogène ou un groupe alkyle, alcoxy, alkylmercapto, halogénoalkyle, halogénoalkylmercapto, phénoxy,

et en ce que, ou bien

a) on fait d'abord réagir le polyéther avec le composé organique dans le rapport d'équivalents de 1:1 et on fait réagir le composé ainsi obtenu dans le rapport molaire 1:1 avec le produit actif, ou bien

b) on fait réagir le produit actif avec le composé organique de formule (II) dans le rapport d'équivalents de 1:1 et on fait réagir le produit obtenu avec le polyéther; ou bien

c) on fait réagir le produit actif, le polyéther et le composé de formule (II) dans le rapport d'équivalents 1:1:1.

3. Utilisation des composés selon la revendication 1, comme produits biologiquement actifs ayant une solubilité améliorée dans l'eau et les alcools aliphatiques inférieurs.

## Claims

1. Compounds, characterised in that active compounds which have a biological action and have at least one hydrogen atom which is active in Zerewitinoff reactions are reacted with a hydrophilic polyester which contains one OH-, NH- or $NH_2$-group and has a water absorption capacity of at least 10%, relative to the weight of the polyether, and a compound of the formula (II)

$$X-\overset{\overset{\displaystyle Z}{\parallel}}{C}-Y \qquad (II)$$

in which

X and Y are identical or different and represent halogen, halogenoalkoxy, alkoxy, alkylmercapto, halogenoalkylmercapto, aryloxy or together represent alkylenedioxy, and

Z represents $-O-$, $-S-$, or $>N-R$,

wherein R represents linear or branched alkyl with 1 to 18 C atoms, or phenyl or naphthyl which is optionally monosubstituted or polysubstituted by halogen, alkyl, alkoxy, alkylmercapto, halogenoalkyl, halogenoalkylmercapto or phenoxy,

wherein either

a) the polyether is first reacted with the compound of the formula (II) in an equivalent ratio of 1:1 and the resulting compound is reacted with the active compound in a molar ratio of 1:1 or

b) the active compound is reacted with the compound of the formula (II) in an equivalent ratio of 1:1 and the resulting compound is reacted with the polyether or

c) the active compound, the polyether and the compound of the formula (II) are reacted in an equivalent ratio of 1:1:1.

2. Process for the preparation of compounds according to Claim 1, characterised in that active compounds which have a biological action and have at least one hydrogen atom which is active in Zerewitinoff reactions are reacted with a hydrophilic polyether which contains one OH-, NH- or $NH_2$-group and has a water absorption capacity of at least 10%, relative to the weight of the polyether, and a compound of the formula (II)

$$X-\overset{\overset{\displaystyle Z}{\parallel}}{C}-Y \qquad (II)$$

in which

X and Y are identical or different and represent halogen, halogenoalkoxy, alkoxy, alkylmercapto, halogenoalkylmercapto, aryloxy or together represent alkylenedioxy, and

Z represents $-O-$, $-S-$, or $>N-R$,

wherein R represents linear or branched alkyl with 1 to 18 C atoms, or phenyl or naphthyl which is optionally monosubstituted or polysubstituted by halogen, alkyl, alkoxy, alkylmercapto, halogenoalkyl, halogenoalkylmercapto or phenoxy,

in an inert solvant wherein either

a) the polyether is first reacted with the organic compound in an equivalent ratio of 1:1 and the resulting compound is reacted with the active compound in a molar ratio of 1:1 or

b) the active compound is reacted with the organic compound of the formula (II) in an equivalent ratio of 1:1 and the resulting compound is reacted with the polyether or

c) the active compound, the polyether and the compound of the formula (II) are reacted in an equivalent ratio of 1:1:1.

3. Use of the compounds according to Claim 1 as active compounds which have a biological action and have improved solubility in water and lower aliphatic alcohols.